(19) Europäisches Patentamt
European Patent Office
Office européen des brevets

(11) **EP 4 706 900 A1**

(12) **EUROPEAN PATENT APPLICATION**

(43) Date of publication:
**11.03.2026 Bulletin 2026/11**

(21) Application number: **24198606.6**

(22) Date of filing: **05.09.2024**

(51) International Patent Classification (IPC):
**B25J 9/16** *(2006.01)*     **G06N 3/045** *(2023.01)*
**G06T 1/00** *(2006.01)*     **G06V 10/82** *(2022.01)*

(52) Cooperative Patent Classification (CPC):
**B25J 9/1671; B25J 9/161; G06N 3/006;**
**G06N 3/0455; G06N 3/047; G06N 3/0895;**
**G06V 10/82;** G05B 2219/40515; G06N 3/092

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Robert Bosch GmbH**
**70442 Stuttgart (DE)**

(72) Inventors:
• **Ngo, Anh Vien**
  **72147 Nehren (DE)**
• **Salman, Muhammad Momin**
  **72072 Tuebingen (DE)**
• **Gabriel, Miroslav**
  **80809 Muenchen (DE)**
• **Montanier, Jean-Marc**
  **70597 Stuttgart (DE)**

Remarks:
Amended claims in accordance with Rule 137(2)
EPC.

(54) **METHOD OF GENERATING A DYNAMICS MODEL FOR PREDICTING A SURROUNDING OF A ROBOTIC DEVICE**

(57)     Various aspects relate to a method of generating a dynamics model for predicting a surrounding of a robotic device resulting from an interaction of the robotic device, the method including: receiving a pre-trained diffusion model configured to generate an output image responsive to inputting an input image and a text prompt that indicates how to modify the input image; receiving a plurality of training tuples, each including a control action, a first image representing a surrounding of the robotic device prior to the robotic device executing the control action, and a second image representing the surrounding of the robotic device after execution of the control action; generating the dynamics model by training the pre-trained diffusion model for each training tuple to generate the second image of the training tuple as output image responsive to inputting the first image as input image and the control action as text prompt.

Fig. 2

EP 4 706 900 A1

**Description**

Prior Art

In robot learning, a dynamics model (also referred to as world model) may be used to simulate a behavior of a surrounding (e.g., environment) in which a robot operates. The dynamics model may be capable to predict how the surrounding of the robot evolves when operating the robot according to specific robot control actions. With this, the dynamics model allows to simulate hypothetical trajectories of the robot to predict the respectively resulting surrounding (indicating the state) (and optionally rewards in reinforcement learning (RL)). These predictions of the surrounding allow a more effective planning of robot motion and, thus, an improved optimizing of the robot's policy, thereby achieving better performance.

Dynamics models may be integrated into model-based RL algorithms, where they are used to generate simulated trajectories for planning and policy optimization. These algorithms alternate between collecting real experience from the environment and updating the dynamics model based on this experience. The updated model is then used to generate simulated trajectories for planning and improving the agent's policy. Dynamics models can accelerate learning by enabling the agent to explore and plan in simulated environments without the need for real interactions.

For vision-based control task, the task of learning a dynamics model may require to predict a next scene's image resulting from an input scene image and a robot control action. However, generating such a dynamics model may require a high training effort.

Disclosure of the Invention

The present disclosure relates to a method of generating a dynamics model for predicting a surrounding of a robotic device resulting from an interaction of the robotic device with its surrounding.

According to various embodiments, the (computer-implemented) method of generating the dynamics model includes: receiving a pre-trained diffusion (probabilistic) model configured to generate an output image responsive to inputting an input image and a text prompt, the text prompt indicating how to modify the input image; receiving a plurality of training tuples, each of the plurality of training tuples including a (textual description of a) control action, a first image representing a surrounding of the robotic device prior to the robotic device executing the control action, and a second image representing the surrounding of the robotic device after execution of the control action; generating the dynamics model by training the pre-trained diffusion model for each training tuple of the plurality of training tuples to generate the second image of the training tuple as output image responsive to inputting the first image of the training tuple as input image and the (textual description of the) control action of the training tuple as text prompt.

The above method allows to exploit a pre-trained (large-scale) diffusion model for generating a dynamics model that is capable to predict a surrounding of a robotic device responsive to an interaction of the robotic device with its surrounding. Employing the pre-trained (large-scale) diffusion model significantly reduces the amount of cost (e.g., computational cost, personal cost due to a self-supervised training, etc.) for generating the dynamics model for robotic control scenarios.

In the following, various examples are described.

Example 1 is the method of generating a dynamics model for predicting a surrounding of a robotic device as described above.

In Example 2, the subject matter of Example 1 can optionally include that the pre-trained diffusion model includes an image-encoder configured to map the input image to a latent state image representation, a text-encoder configured to map the text prompt to a latent state text representation, a diffusion portion configured to generate a noisy latent state image representation by adding noise to the latent state image representation, a denoising network (e.g., U-Net) configured to generate a denoised latent state image representation by denoising the noisy latent state image representation with conditioning on the latent state text representation, and an image-decoder configured to generate the output image by decoding the denoised latent state image representation; and wherein, when training the pre-trained diffusion model, (weights of the image-encoder, weights of the image-decoder, and weights of the text-encoder are fixed and) only weights of the denoising network are adapted.

In Example 3, the subject matter of Example 1 or 2 can optionally include that the pre-trained diffusion model includes a denoising network configured to denoise a noisy latent state representation of the input image with conditioning on the text prompt (e.g., a latent state representation of the text prompt); and wherein, when training the pre-trained diffusion model, only weights of the denoising network are adapted.

Freezing the weights of the pre-trained diffusion model except for the weights of the denoising network allows to preserve the text recognition capability and the image recognition capability of the pre-trained diffusion model while at the same time reducing the training effort (e.g., computational cost and/or time cost) for generating the dynamics model.

In Example 4, the subject matter of any one of Examples 1 to 3 can optionally include that the pre-trained diffusion model includes a denoising network configured to denoise a noisy latent state representation of the input image with conditioning on the text prompt (e.g., a latent state representation of the text prompt); wherein each training tuple of the plurality of training tuples further includes a point cloud representing the surrounding of the robotic device prior to the robotic device executing the control action; and wherein generating the dynamics model includes: initializing the dynamics model by coupling the denoising network with a copy thereof according to a Control Net architecture to allow for inputting conditioning information into the copy of the denoising network; training the dynamics model by adapting the copy of the denoising network for each training tuple to generate the second image of the training tuple as output image responsive to inputting the first image of the training tuple as input image, the (textual description of the) control action of the training tuple as text prompt, and the point cloud into the copy of the denoising network as conditioning information.

It has been found that using the ControlNet architecture to condition the denoising network on a point cloud that represents the surrounding of the robotic device prior to the robotic device executing the control action improves the prediction capability of the dynamics model. Illustratively, in addition to the first image which shows the surrounding of the robotic device, further information about the surrounding are input into the dynamics model which results in an improved prediction of the second image (viz. the surrounding of the robotic device after execution of the control action).

In Example 5, the subject matter of Example 4 can optionally include that inputting the point cloud into the copy of the denoising network as conditioning information includes: determining a control action conditioned point cloud, wherein each point of the control action conditioned point cloud is (bijectively) assigned to a corresponding point of the point cloud and indicates a distance of the corresponding point to a point at which the control action is to be applied; and inputting the control action conditioned point cloud into the copy of the denoising network as conditioning information when training the dynamics model.

Using the control action conditioned point cloud allows to input spatial information of the control action into the denoising network, thereby significantly increasing the prediction capability of the dynamics model.

In Example 6, the subject matter of Example 4 or 5 can optionally include that, for each training tuple, the first image shows a respective object (which is to be manipulated by the robotic device according to the control action) and the control action indicates a target position of the respective object; wherein, when training the dynamics model, a representation of the target position is input into the copy of the denoising network as conditioning information.

For example, the control action conditioned point cloud of Example 5 may be a flow conditioned point cloud representing the target position. This provides a spatial encoding of the control action, thereby significantly increasing the prediction capability of the dynamics model.

Example 7 is a method for robot motion planning, the method including: generating the dynamics model according to the method of any one of Examples 1 to 6; acquiring an image showing a surrounding of the robotic device; for each control action of one or more control actions, inputting the control action and the (acquired) image (and optionally further the point cloud provided that in combination with Example 4 and/or the target position provided that in combination with Example 6) into the dynamics model to determine a predicted surrounding of the robotic device resulting from the control action; and determining a control trajectory for controlling the robotic device taking into account the respective predicted surrounding determined for each of the one or more control actions.

Example 8 is a method for controlling a robotic device (to carry out a vision-based control task), the method including: generating the dynamics model according to the method of any one of Examples 1 to 6; acquiring an image showing a surrounding of the robotic device; for each control action of one or more control actions, inputting the control action and the (acquired) image (and optionally further the point cloud provided that in combination with Example 4 and/or the target position provided that in combination with Example 6) into the dynamics model to determine a respective predicted surrounding of the robotic device resulting from the control action; and controlling the robotic device taking into account the respective predicted surrounding determined for each of the one or more control actions.

Example 9 is a data processing device configured to carry out the method of any one of Examples 1 to 6.

Example 10 is a robot device controller configured to carry out the method of Example 7 or 8.

Example 11 is a robot device including: the robot device controller according to Example 10; and at least one perception sensor (e.g., a depth camera) configured to acquire the image.

Example 12 is a computer program including instructions which, when executed by a computer, causes the computer to carry out the method according to any one of Examples 1 to 8.

Example 13 is a computer-readable medium including instructions which, when executed by a computer, causes the computer to carry out the method according to any one of Examples 1 to 8.

In the drawings, similar reference characters generally refer to the same parts throughout the different views. The drawings are not necessarily to scale, emphasis instead generally being placed upon illustrating the principles of the invention. In the following description, various aspects are described with reference to the following drawings, in which:

Figure 1 shows a robotic device arrangement according to various aspects;
Figure 2 shows a flow diagram of a method of generating a dynamics model according to various aspects and Figure 5 shows a dynamics model trained according to the method; and

Figure 3 shows an exemplary architecture of a pre-trained diffusion model and Figure 4 shows aspects of an exemplary ControlNet architecture.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

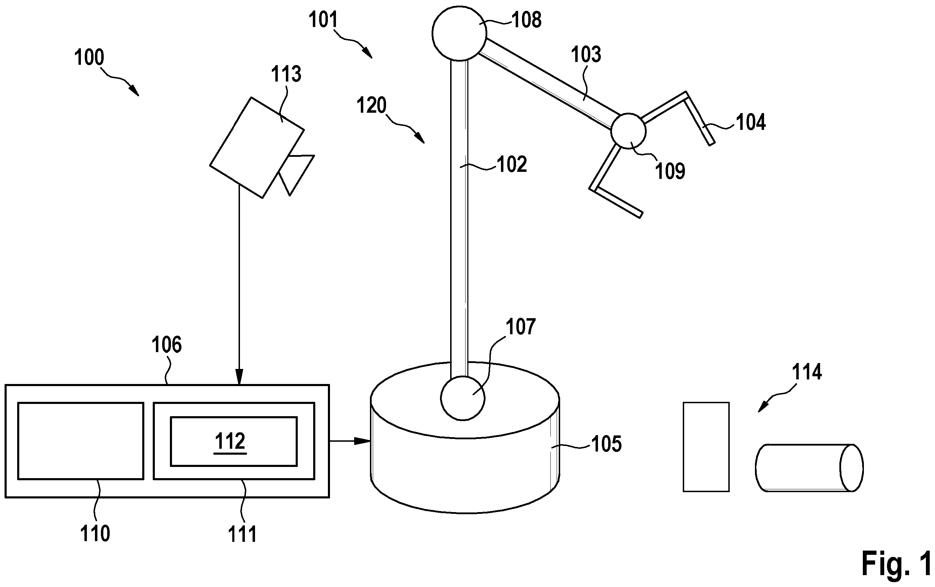

**FIG.1** shows a robotic device arrangement 100 according to various aspects. The robotic device arrangement 100 may include a robotic device 101 (short: robot). The robotic device 101 shown in FIG.1 and described below by way of example is an exemplary robotic device serving for illustration and may include, for example, an industrial robot in the form of a robot arm 120 for moving, assembling or machining a workpiece, for bin-picking, etc. It is noted that this robotic device serves for illustration and may, in general, be any type of computer-controlled device, such as a robot (e.g., a manufacturing robot, a maintenance robot, a domestic robot, a medical robot, etc.), a vehicle (e.g., an autonomous vehicle), a domestic appliance, a production machine, a personal assistant, an access control system, etc., as well as any other type of robotic device.

The robot arm 120 may include manipulators 102, 103, 104 and a base (or generally a support) 105 by which the manipulators 102, 103, 104 are supported. The term "manipulators " may refer to the movable parts of the robotic device 101 whose actuation enables physical interaction with the environment, e.g. to carry out a task, e.g. to carry out or more skills of the robotic device 101.

For control of the robotic device 101, the robotic device arrangement 100 may include a (robot) controller 106 configured to implement the interaction with the environment according to a control program. The last manipulator 104 (furthest from the support 105) of the manipulators 102, 103, 104 is also referred to as end-effector 104. The type of end-effector 104 may define, whether the robotic device 101 is capable for a non-prehensile and/or prehensile object manipulation. A prehensile object manipulation may refer to a manipulation of an object with grasping the object, whereas a non-prehensile object manipulation may refer to a manipulation of an object without grasping the object. Thus, the robotic device 101 may be capable for a prehensile object manipulation in the case that the end-effector 104 includes at least one grasping tool, such as a gripping tool (as exemplarily illustrated in FIG.1) and/or a suction device (e.g. a suction head). In either case, the robotic device 101 may be capable for a non-prehensile object manipulation, e.g., by pushing the object (without grasping it), to, for example, change its lateral position, its orientation, etc.

The other manipulators 102, 103 (closer to the support 105) may form a positioning device such that, together with the end-effector 104, the robot arm 120 with the end-effector 104 at its end is provided. The robot arm 120 may be a mechanical arm that can provide similar functions as a human arm (which can carry out non-prehensile object manipulation, such as holding an object on a hand or pushing an object using a hand or an arm, as well as prehensile object manipulation, such as grasping objects using the hands).

The robot arm 120 may include joint elements 107, 108, 109 interconnecting the manipulators 102, 103, 104 with each other and with the support 105. A joint element 107, 108, 109 may have one or more joints, each of which may provide rotatable motion (i.e. rotational motion) and/or translatory motion (i.e. displacement) to associated manipulators relative to each other. The movement of the manipulators 102, 103, 104 may be initiated by means of actuators controlled by the controller 106.

The term "actuator" may be understood as a component adapted to affect a mechanism or process in response to be driven. The actuator may implement instructions issued by the controller 106 (the so-called activation) into mechanical movements. The actuator, e.g. an electromechanical converter, may be configured to convert electrical energy into mechanical energy in response to driving.

The term "controller" may be understood as any type of logic implementing entity, which may include, for example, a circuit and/or a processor capable of executing software stored in a storage medium, firmware, or a combination thereof, and which can issue instructions, e.g. to an actuator in the present example. The controller may be configured, for example, by program code (e.g., software) to control the operation of a system, a robot in the present example.

In the present example, the controller 106 may include one or more processors 110 and a memory 111 storing code and data based on which the processor 110 controls the robot arm 120. According to various embodiments, the controller 106 controls the robot arm 120 on the basis of a robot control model (e.g. including a machine-learning model trained as detailed herein) 112 stored in the memory 111.

As an example, the robot's prehensile task is to perform bin-picking, i.e. grasp an object of multiple objects 114 (wherein grasping also includes picking up the object 114 with a suction cup) and, for example, show the object 114 to a scanner or move the object 114 to another bin. For robot motion planning (viz. to be able to determine the object 114 to pick up, to determine a suitable grasping location on the object 114, and to determine a suitable trajectory according to which the object 114 is moved), the controller 106 may use images of the robot's workspace where the objects 114 are located. To be able to determine the suitable grasping location and the suitable trajectory in a current scenario, the controller 106 employ a dynamics model that is capable to predict an image of the robot's surrounding in the case that the robot would carry out a specific (vision-based) control action (e.g., as part of a control task).

As another example, the robot's non-prehensile task is to push an object of multiple objects 114 to another location and/or change an orientation of the object. In robot motion planning a suitable contact position at which the object 114 is to be contacted and/or a suitable trajectory according to which the object 114 is moved, may be determined using the images of the robot's workspace where the objects 114 are located. To be able to determine the suitable contact location and the suitable trajectory in a current scenario, the controller 106 employ a dynamics model that is capable to predict an image of the robot's surrounding in the case that the robot would carry out a specific (vision-based) control action (e.g., as part of a control task).

The images of the surrounding of the robotic device may be provided by one or more imaging sensors 113 (e.g., attached to the robot arm 120 or in any other way such that the controller 106 may control the viewpoint of the one or more imaging sensors 113). To be able to determine the object 114 to pick up and to determine a suitable grasping location on the object 114, the controller 106 may use images of the robot's workspace where the objects 114 are located.

An imaging sensor, as used herein, may be, for example, a camera (e.g., a standard camera, a digital camera, an infrared camera, a stereo camera, etc.), a radar sensor, a LIDAR sensor, an ultrasound sensor, etc. Thus, an image may be an RGB image, an RGB-D image, or a depth image (also referred to as a D image). A depth image described herein may be any type of image that includes depth information. Illustratively, a depth image may have 3-dimensional information about one or more objects. For example, a depth image described herein may include a point cloud provided by a LIDAR sensor and/or a radar sensor. For example, a depth image may be an image with depth information provided by a LIDAR sensor.

Various aspects refer to a method of generating a dynamics model that is capable to predict a surrounding of the robotic device in the case that the robotic device would execute a specific control action.

According to various aspects, the dynamics model may be generated (e.g., learned or trained) while the robotic device 101 is inoperative. The generated dynamics model may be used during operation of the robotic device 101 to determine skills to be performed by the robotic device 101 (e.g., may be used for robot motion planning). Optionally, the generated dynamics model may be additionally trained during operation of the robotic device 101.

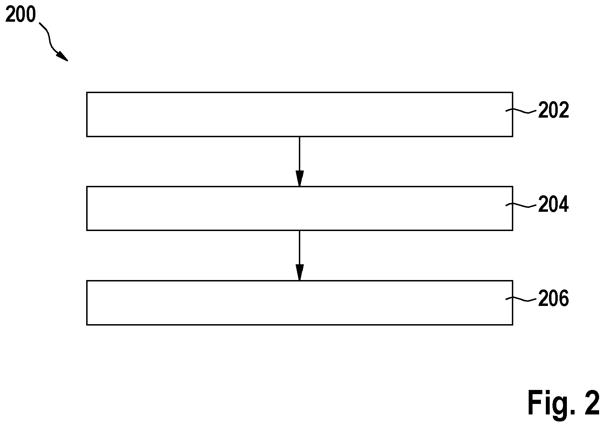

**FIG.2** shows a flow diagram of a (computer-implemented) method 200 of generating a dynamics model for predicting a surrounding of a robotic device according to various aspects.

The method 200 may include (in 202) receiving a pre-trained diffusion (probabilistic) model configured to generate an output image responsive to inputting an input image and a text prompt. The text prompt may indicate how to modify the input image.

The method 200 may include (in 204) receiving a plurality of training tuples. Each training tuple of the plurality of training tuples may include a (e.g., textual description of a) control action, a first image representing a surrounding of the robotic device prior to the robotic device executing the control action, and a second image representing the surrounding of the robotic device after execution of the control action.

The method 200 may include (in 206) generating the dynamics model by training (e.g., fine-tuning) the pre-trained diffusion model for each training tuple of the plurality of training tuples to generate the second image of the training tuple as output image responsive to inputting the first image of the training tuple as input image and the (e.g., textual description of the) control action of the training tuple as text prompt.

Illustratively, an (e.g., open-source) image-editing diffusion model (e.g., a generative foundation model) that is pre-trained on images and text prompts in general (and in large scale) may be adapted to serve as a dynamics model for robot control scenarios.

In the following, various aspects of the method 200 are described in further detail.

As detailed herein, the pre-trained diffusion model may be a general-purpose model that is trained to edit an input image in accordance with an input text prompt.

As an example, the pre-trained diffusion model may be an Instructpix2pix model as detailed in T. Brooks et al.: "InstructPix2Pix: Learning to Follow Image Editing Instructions", arXiv:2211.09800, 2022 (in the following referred to as reference [1]). It is understood that this model architecture serves as an example and that the pre-trained diffusion (foundation) model may have any kind of model architecture allowing to edit an input model based on a text prompt.

It has been found that such a pre-trained generative (diffusion-based) foundation model can be adapted to predict how the surrounding of the robotic device 101 changes in the case that the robotic device 101 would execute a (e.g., non-prehensile) manipulation skill (e.g., including a control action), thereby generating a dynamics model for robot control scenarios. It is understood that the dynamics model can be used to predict the changes to the surrounding in non-prehensile object manipulation as well as prehensile object manipulation.

The pre-trained diffusion model may be based on Stable Diffusion in which the diffusion model optimization operates on a latent space, instead of pixel spaces. With this, the generated dynamics model learns the dynamics of the robot's surrounding in latent spaces. This allows to use the generated dynamics model for latent (robot motion) planning, which is data-efficient and has an improved generalization ability.

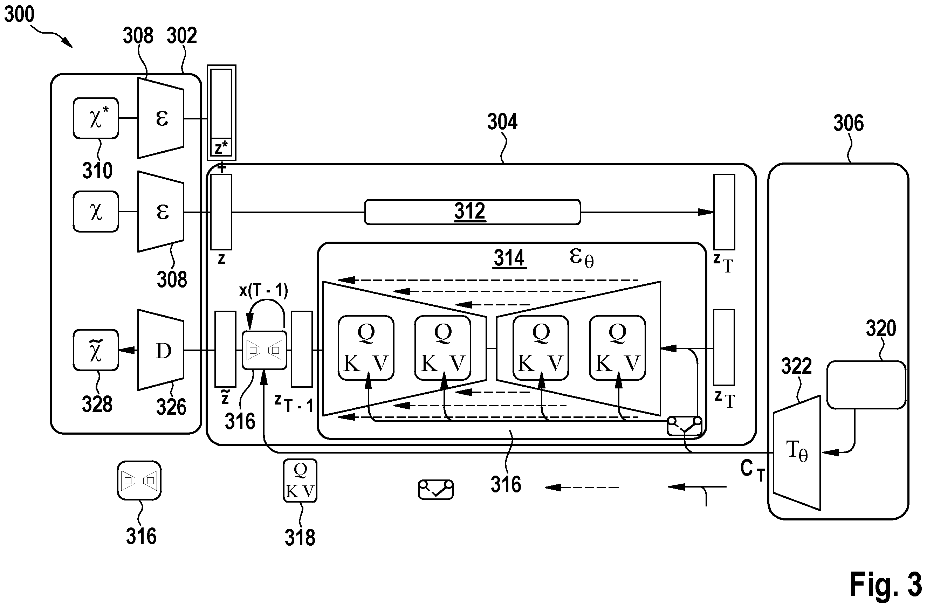

**FIG.3** shows an exemplary architecture of a pre-trained diffusion model 300 according to various aspects. The pre-trained diffusion model 300 may have a Stable Diffusion architecture with an adaption to further allow for inputting an (input) image. FIG.3 illustrates a pixel space 302, a latent space 304, and conditioning information 306.

The pre-trained diffusion model 300 may include:

- an image-encoder, $\varepsilon$, 308 configured to map an input image, $x^*$, 310 to a latent state image representation, $z^*$, and to map a (learned) noisy version of a ground-truth, $x$, to a corresponding latent state image representation, $z$;
- a text-encoder, $\tau_\theta$, 322, configured to map a text prompt 320 to a latent state text representation, $c_T$;
- a diffusion portion 312 configured to generate a noisy latent state image representation, $z_T$, by adding noise to a concatenation of the latent state image representation, $z^*$, of the input image, $x^*$, and the latent state image representation, $z$, of the noisy version of the ground-truth;
- a denoising network, $\varepsilon_\theta$, 314 configured to generate a denoised latent state image representation, $\tilde{z}$, by denoising the noisy latent state image representation, $z_T$, with conditioning on the latent state text representation; and
- an image-decoder, $D$, 326 configured to generate an output image, $\tilde{x}$, 328 by decoding the denoised latent state image representation, $\tilde{z}$.

The denoising network, $\varepsilon_\theta$, 314 may have a U-Net architecture with a respective denoising step 316 between two consecutive latent state representations, $z_t$ and, $z_{t-1}$, from, $z_T$ to $\tilde{z}$. Each denoising step 316 may include encoding and decoding layers with the QKV block indicating the crossattention. Further information on the Stable Diffusion architecture can be found in R. Rombach et al.: "High-resolution image synthesis with latent diffusion models", arXiv:2112.10752v2, 2022 (in the following referred to as reference [2]).

As detailed herein, this pre-trained diffusion model 300 may be adapted (e.g., fine-tuned) using a plurality of training tuples. Each training tuple thereof may be acquired by controlling to the robotic device 101 to execute a respective control action. The one or more imaging sensors 113 may be employed to acquire the first image of the surrounding of the robotic device 101 prior to execution of the control action and the second image of the surrounding of the robotic device 101 after execution of the control action. Each training tuple may include a textual description of the control action. In the exemplary scenario in that the robotic device 101 is to execute a pushing action, the textual description of the control action may be for example: "shift the object at pixel position (x; y) to pixel position (dx; dy)" (with (x; y) being values of the pixel position in the first image, and (dx; dy) being the pixel position to which the object is to be shifted to). It is understood that this merely serves as an example for illustration and that the textual description of the control action may be any suitable description of a control command depending on the manipulation task the robotic device 101 is to execute.

According to some aspects, the dynamics model may be generated by (self-supervised) training the pre-trained diffusion model 300 for each training tuple of the plurality of training tuples to generate the second image of the training tuple as output image 328 responsive to inputting the first image of the training tuple as input image 310 and the (e.g., textual description of the) control action of the training tuple as text prompt 320.

The objective function that is to be minimized then reads as follows:

$$L = \mathbb{E}_{\mathcal{E}(x), \mathcal{E}(x*), c_T, \epsilon \sim N(0,1), t}[\| \epsilon - \epsilon_\theta(z_t, t, \mathcal{E}(x*), c_T) \|_2^2]$$

According to various aspects, only weights of the denoising network 314 may be adapted when training the pre-trained diffusion model 300. Hence, weights of each of the image-encoder 308, the image decoder 326, and the text-encoder 322 may be fixed (also referred to as frozen). With this, the text recognition capability and the image recognition capability of the pre-trained diffusion model 300 are preserved while at the same time reducing the training effort for generating the dynamics model.

It has been found that the prediction capability of the dynamics model in robotic object manipulation scenarios can be significantly increased when further including spatial conditioning information, $c_s$, into the dynamics model (in training as well as inference). Thus, according to various aspects, each training tuple of the plurality of training tuples may further include a respective spatial conditioning information representing spatial information of the surrounding of the robotic device 101.

As an example, the spatial conditioning information may include a point cloud that represents the surrounding of the robotic device 101 prior execution of the control action. For this, the one or more imaging sensors 113 may include at least one LIDAR and/or radar sensor configured to acquire the point cloud and/or a depth camera configured to acquire a depth image from which the point cloud may be derived.

In some aspects, the spatial conditioning information may include a control action conditioned point cloud. Each point of the control action conditioned point cloud may be (bijectively) assigned to a corresponding point of the point cloud and may indicate a distance of the corresponding point to a point at which the control action is to be applied. Thus, given an

6

action contact point (as point at which the control action is to be applied) $a_t = p_g$, the distance of each point $p_i$ of the point cloud to the action contact point may be defined by $p_g - p_i$ or $p_i - p_g$. This allows to further input spatial information of the control action, thereby significantly increasing the prediction capability of the dynamics model.

According to various aspects, the spatial conditioning information may include a flow conditioned point cloud that further includes the target position $p_r$ (viz. the location to which the object is to be moved). For further information on the determination of a control action and/or flow conditioned point cloud see B. Shen et al.: "ACID: Action-Conditional Implicit Visual Dynamics for Deformable Object Manipulation", arXiv:2203.06856v3, 2022 (in the following referred to as reference [3]).

Thus, in addition to the discrete information of the control action (viz. the point at which the control action is to be applied, such as the contact point), continuous information (by means of the target position) of the control action are included as well, thereby providing a spatial encoding of the overall control action.

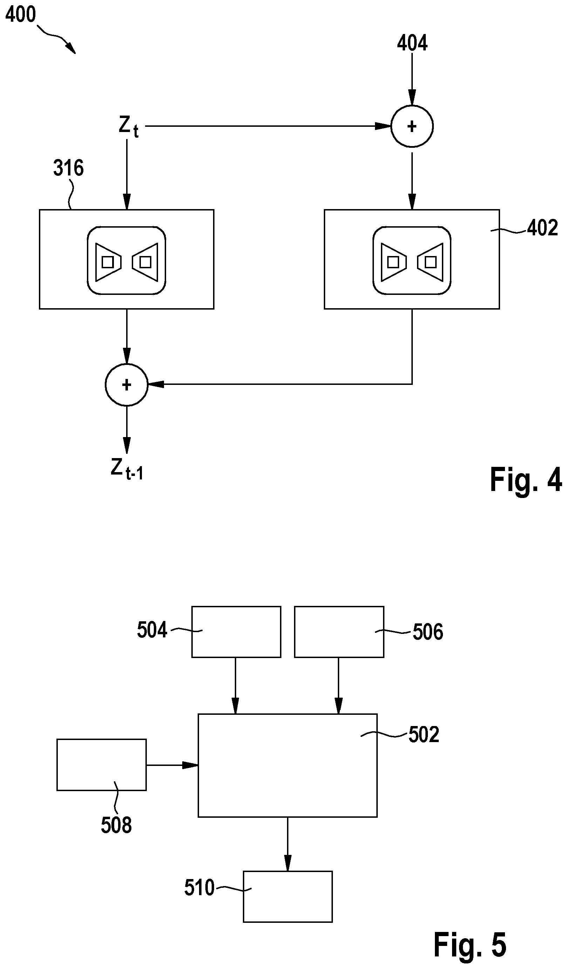

The architecture of the pre-trained diffusion model 300 may be changed prior to the training in 206. According to various aspects, the pre-trained diffusion model 300 may be adapted according to a ControlNet architecture by coupling the encoding and decoding layers of each denoising step 316 of the denoising network 314 with a (respective) copy 402 thereof. The Control Net architecture is detailed in L. Zhang et al.: "Adding Conditional Control to Text-to-Image Diffusion Models", arXiv:2302.05543v3, 2023 (in the following referred to as reference [4]). **FIG.4** shows aspects of an exemplary ControlNet architecture. The latent state representation, $z_t$, at a respective step t may be concatenated (by zero convolution) with the spatial conditioning information 404 and this concatenation may be input into the copy 402 of the denoising step 316. The output of the denoising step 316 and the output of the copy 402 may then be concatenated (by zero convolution) to generate the latent state representation, $z_t$, at the prior step t-1.

Hence, a copy of the denoising network 314 may include a respective copy 402 for each denoising step 316. This architecture of the diffusion model may then be trained by adapting the copy of the denoising network 314 (and by not adapting, viz. locking, the denoising network 314) for each training tuple to generate the second image of the training tuple as output image 328 responsive to inputting the first image of the training tuple as input image 308 into the pre-trained diffusion model, the (textual description of the) control action of the training tuple as text prompt into the pre-trained diffusion model, and the point cloud into the copy of the denoising network as spatial conditioning information.

**FIG.5** shows a dynamics model 502 generated as detailed herein. The dynamics model 502 may be configured to generate a predicted (output) image 510 that predicts the surrounding of the robotic device 101 in the case that the robotic device 101 would execute a control action responsive to inputting an image 504 that represents a current surrounding of the robotic device 101 (viz. prior to the execution of the control action), inputting a textual description of the control action 506, and optionally further spatial conditioning information, $c_s$, 508 (e.g., including the flow-conditioned point cloud of the current surrounding).

The dynamics model 502 may be employed for robot motion planning. A method for robot motion planning may include acquiring an image (e.g., using one or more imaging sensors as described herein) which shows one or more objects (in the vicinity of the robotic device 101). The method may include for each control action of one or more control actions, inputting the textual description of the control action, the (acquired) image (and optionally further the point cloud, the control action conditioned point cloud, and/or the flow conditioned point cloud) into the dynamics model 502 to determine a predicted surrounding of the robotic device 101 resulting from the control action. The method may then include to determine a control trajectory for controlling the robotic device 101 (e.g., the robot arm 120) taking into account the respective predicted surrounding determine for each of the one or more control actions (e.g., controlling the robot arm 120 to pick up (e.g., grip) an object of the one or more objects in a prehensile object manipulation scenario or to push an object of the one or more objects in a non-prehensile object manipulation scenario).

Thus, the dynamics model 502 may be employed to control the robotic device 101.

Illustratively, the acquired image 504 may represent the prior (current) state $s_t$ the robotic device arrangement 100 is in, the predicted image 510 may represent the posterior state $s_{t+1}$ the robotic device arrangement 100 would be in when executing the control action $a_t$ represented by the textual description 506 thereof. The dynamics model may implement a transition function, f, to map the prior (current) state $s_t$ and the control action $a_t$ to the posterior state $s_{t+1}$ by: $s_{t+1} = f(s_t, a_t)$ or $s_{t+1} = f(s_t, a_t, c_s)$ when using the spatial conditioning information $c_s$.

While in the above embodiments, the approach of FIG.2 is applied to control the robot arm 120, it may be applied for computing a control signal for controlling any technical system in a scenario where vision-based robot control tasks play a role, e.g. a computer-controlled machine, like a robot, a vehicle, a domestic appliance, a manufacturing machine, etc.

**Claims**

1. A method (200) of generating a dynamics model (502) for predicting a surrounding of a robotic device (101) resulting from an interaction of the robotic device (101) with its surrounding, the method (200) comprising:

• receiving (202) a pre-trained diffusion model (300) configured to generate an output image (328) responsive to inputting an input image (310) and a text prompt (320), the text prompt (320) indicating how to modify the input image (310);

• receiving (204) a plurality of training tuples, each of the plurality of training tuples comprising a control action, a first image representing a surrounding of the robotic device (101) prior to the robotic device (101) executing the control action, and a second image representing the surrounding of the robotic device (101) after execution of the control action;

• generating (206) the dynamics model (502) by training the pre-trained diffusion model (300) for each training tuple of the plurality of training tuples to generate the second image of the training tuple as output image (328) responsive to inputting the first image of the training tuple as input image (310) and the control action of the training tuple as text prompt (320).

2. The method (200) according to claim 1,

wherein the pre-trained diffusion model (300) comprises a denoising network (314) configured to denoise a noisy latent state representation of the input image (310) with conditioning on the text prompt (320); and

wherein, when training the pre-trained diffusion model (300), only weights of the denoising network (314) are adapted.

3. The method (200) according to claim 1 or 2,

wherein the pre-trained diffusion model (300) comprises a denoising network (314) configured to denoise a noisy latent state representation of the input image (310) with conditioning on the text prompt (320);

wherein each training tuple of the plurality of training tuples further comprises a point cloud representing the surrounding of the robotic device (101) prior to the robotic device (101) executing the control action; and

wherein generating the dynamics model (502) comprises:

• initializing the dynamics model by coupling the denoising network (314) with a copy thereof according to a Control Net architecture to allow for inputting conditioning information into the copy of the denoising network;

• training the dynamics model (502) by adapting the copy of the denoising network for each training tuple to generate the second image of the training tuple as output image (328) responsive to inputting the first image of the training tuple as input image (310), the control action of the training tuple as text prompt (320), and the point cloud into the copy of the denoising network as conditioning information.

4. The method (200) according to claim 3,
wherein inputting the point cloud into the copy of the denoising network as conditioning information comprises:

• determining a control action conditioned point cloud, wherein each point of the control action conditioned point cloud is assigned to a corresponding point of the point cloud and indicates a distance of the corresponding point to a point at which the control action is to be applied; and

• inputting the control action conditioned point cloud into the copy of the denoising network as conditioning information when training the dynamics model.

5. The method (200) according to claim 3 or 4,
wherein, for each training tuple, the first image shows a respective object and the control action indicates a target position of the respective object; wherein, when training the dynamics model (502), a representation of the target position is input into the copy of the denoising network as conditioning information.

6. A method for robot motion planning, the method comprising:

• generating the dynamics model (502) according to the method of any one of claims 1 to 5;

• acquiring an image showing a surrounding of the robotic device (101);

• for each control action of one or more control actions, inputting the control action and the image into the dynamics model (502) to determine a predicted surrounding of the robotic device (101) resulting from the control action; and

• determining a control trajectory for controlling the robotic device (101) taking into account the respective predicted surrounding determined for each of the one or more control actions.

7. A robot device controller configured to carry out the method of claim 6.

8.  A robot device, comprising:

    • the robot device controller according to claim 7; and
    • at least one perception sensor (113) configured to acquire the image.

9.  A computer program comprising instructions which, when executed by a computer, causes the computer to carry out the method according to any one of claims 1 to 6.

10. A computer-readable medium comprising instructions which, when executed by a computer, causes the computer to carry out the method according to any one of claims 1 to 6.

**Amended claims in accordance with Rule 137(2) EPC.**

1.  A method for robot motion planning, the method comprising:

    generating a dynamics model (502) for predicting a surrounding of a robotic device (101) resulting from an interaction of the robotic device (101) with its surrounding, the generating of the dynamics model (502) comprising:

    • receiving (202) a pre-trained diffusion model (300) configured to generate an output image (328) responsive to inputting an input image (310) and a text prompt (320), the text prompt (320) indicating how to modify the input image (310);
    • receiving (204) a plurality of training tuples, each of the plurality of training tuples comprising a control action, a first image representing a surrounding of the robotic device (101) prior to the robotic device (101) executing the control action, and a second image representing the surrounding of the robotic device (101) after execution of the control action;
    • generating (206) the dynamics model (502) by training the pre-trained diffusion model (300) for each training tuple of the plurality of training tuples to generate the second image of the training tuple as output image (328) responsive to inputting the first image of the training tuple as input image (310) and the control action of the training tuple as text prompt (320);

    acquiring an image showing a surrounding of the robotic device (101);
    for each control action of one or more control actions, inputting the control action and the image into the dynamics model (502) to determine a predicted surrounding of the robotic device (101) resulting from the control action; and
    determining a control trajectory for controlling the robotic device (101) taking into account the respective predicted surrounding determined for each of the one or more control actions.

2.  The method (200) according to claim 1,

    wherein the pre-trained diffusion model (300) comprises a denoising network (314) configured to denoise a noisy latent state representation of the input image (310) with conditioning on the text prompt (320); and
    wherein, when training the pre-trained diffusion model (300), only weights of the denoising network (314) are adapted.

3.  The method (200) according to claim 1 or 2,

    wherein the pre-trained diffusion model (300) comprises a denoising network (314) configured to denoise a noisy latent state representation of the input image (310) with conditioning on the text prompt (320);
    wherein each training tuple of the plurality of training tuples further comprises a point cloud representing the surrounding of the robotic device (101) prior to the robotic device (101) executing the control action; and
    wherein generating the dynamics model (502) comprises:

    • initializing the dynamics model by coupling the denoising network (314) with a copy thereof according to a ControlNet architecture to allow for inputting conditioning information into the copy of the denoising network;
    • training the dynamics model (502) by adapting the copy of the denoising network for each training tuple to generate the second image of the training tuple as output image (328) responsive to inputting the first image of the training tuple as input image (310), the control action of the training tuple as text prompt (320), and the point cloud into the copy of the denoising network as conditioning information.

**4.** The method (200) according to claim 3,
wherein inputting the point cloud into the copy of the denoising network as conditioning information comprises:

• determining a control action conditioned point cloud, wherein each point of the control action conditioned point cloud is assigned to a corresponding point of the point cloud and indicates a distance of the corresponding point to a point at which the control action is to be applied; and
• inputting the control action conditioned point cloud into the copy of the denoising network as conditioning information when training the dynamics model.

**5.** The method (200) according to claim 3 or 4,

wherein, for each training tuple, the first image shows a respective object and the control action indicates a target position of the respective object;
wherein, when training the dynamics model (502), a representation of the target position is input into the copy of the denoising network as conditioning information.

**6.** A robot device controller configured to carry out the method of any one of claims 1 to 5.

**7.** A robot device, comprising:

• the robot device controller according to claim 6; and
• at least one perception sensor (113) configured to acquire the image.

**8.** A computer program comprising instructions which, when executed by a computer, causes the computer to carry out the method according to any one of claims 1 to 5.

**9.** A computer-readable medium comprising instructions which, when executed by a computer, causes the computer to carry out the method according to any one of claims 1 to 5.

Fig. 1

Fig. 2

Fig. 3

400

404

$Z_t$

316

402

$+$

$+$

$Z_{t-1}$

**Fig. 4**

504

506

502

508

510

**Fig. 5**

## EUROPEAN SEARCH REPORT

**Application Number**

EP 24 19 8606

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/364776 A1 (CHAU RODRIGO [DE] ET AL) 16 November 2023 (2023-11-16) | 1-5,9,10 | INV. B25J9/16 |
| A | * the whole document * | 6-8 | G06N3/045 |
| A | MOHIT SHRIDHAR ET AL: "Generative Image as Action Models", ARXIV.ORG, CORNELL UNIVERSITY LIBRARY, 201 OLIN LIBRARY CORNELL UNIVERSITY ITHACA, NY 14853, 10 July 2024 (2024-07-10), XP091900861, * the whole document * | 1-10 | G06T1/00 G06V10/82 |
| A | KATARA PUSHKAL ET AL: "Gen2Sim: Scaling up Robot Learning in Simulation with Generative Models", 2024 IEEE INTERNATIONAL CONFERENCE ON ROBOTICS AND AUTOMATION (ICRA), IEEE, 13 May 2024 (2024-05-13), pages 6672-6679, XP034664362, DOI: 10.1109/ICRA57147.2024.10610566 [retrieved on 2024-08-08] * the whole document * | 1-10 | |

**TECHNICAL FIELDS SEARCHED (IPC)**

B25J
G06T
G06N
G06V
G05B

The present search report has been drawn up for all claims

| Place of search | Date of completion of the search | Examiner |
|---|---|---|
| The Hague | 3 March 2025 | Marinica, Raluca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 8606

This annex lists the patent family members relating to the patent documents cited in  the above-mentioned European search report.
The members are as contained in the European Patent Office EDP file on
The European Patent Office is in no way liable for these particulars which are merely given for the purpose of information.

03-03-2025

| Patent document cited in search report | Publication date | Patent family member(s) | Publication date |
|---|---|---|---|
| US 2023364776 A1 | 16-11-2023 | CN 117047748 A | 14-11-2023 |
| | | DE 102022204724 A1 | 16-11-2023 |
| | | US 2023364776 A1 | 16-11-2023 |

EPO FORM P0459

For more details about this annex : see Official Journal of the European Patent Office, No. 12/82

**EP 4 706 900 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. BROOKS et al.** InstructPix2Pix: Learning to Follow Image Editing Instructions. *arXiv:2211.09800*, 2022
- **R. ROMBACH et al.** High-resolution image synthesis with latent diffusion models. *arXiv:2112.10752v2*, 2022
- **B. SHEN et al.** ACID: Action-Conditional Implicit Visual Dynamics for Deformable Object Manipulation. *arXiv:2203.06856v3*, 2022
- **L. ZHANG et al.** Adding Conditional Control to Text-to-Image Diffusion Models. *arXiv:2302.05543v3*, 2023